# EUROPÄISCHE PATENTSCHRIFT

(11) **EP 0 813 676 B1**
(45) Veröffentlichungstag und Bekanntmachung des Hinweises auf die Patenterteilung: **22.09.1999**
(21) Anmeldenummer: 96907248.7
(22) Anmeldetag: 04.03.1996
(51) Int. Cl.: G01D 3/08, G05B 9/02

(54) **VERFAHREN ZUR BESTIMMUNG EINER ZUVERLÄSSIGKEITS-KENNGRÖSSE EINES RESPONSIVEN SYSTEMS SOWIE EIN ENTSPRECHENDES SYSTEM ZUR SIGNALVERARBEITUNG**
METHOD OF DETERMINING A RELIABILITY PARAMETER FOR A RESPONSIVE SYSTEM, AND SUCH A SYSTEM FOR SIGNAL PROCESSING
METHODE DE DETERMINATION DU PARAMETRE DE FIABILITE D'UN SYSTEME TEMPS REEL ET INSENSIBLE AUX DEFAILLANCES AINSI QUE D'UN SYSTEME DE TRAITEMENT DES SIGNAUX CORRESPONDANTS

(30) Priorität: 10.03.1995 DE 19508720
(43) Veröffentlichungstag der Anmeldung: 29.12.1997
(73) Patentinhaber: SIEMENS AKTIENGESELLSCHAFT, 80333 München (DE)
(72) Erfinder: WAEDT, Karl, D-91052 Erlangen (DE); SCHULZE, Werner, D-91315 Höchstadt (DE)
(86) Internationale Anmeldenummer: DE9600383
(87) Internationale Veröffentlichungsnummer: WO9628710

(56) Entgegenhaltungen:
- EP-A- 0 416 370
- CONTROL ENGINEERING INTERNATIONAL, Bd. 41, Nr. 9, August 1994, PUBLISHING US, XP000468482 HENRY: "validating data from smart sensors"

## Beschreibung

Die Erfindung betrifft ein responsives System zur Signalverarbeitung, welches zu einem Eingangssignalzustand einen eindeutigen Ausgangssignalzustand erzeugt, mit einer Mehrzahl von Datenverarbeitungs-Einheiten, die über Datenübertragungs-Einheiten miteinander verbunden sind und auf denen Rechnerprogramme implementiert sind, welche modular aufgebaut sind. Die Erfindung betrifft weiterhin ein Verfahren zur Bestimmung einer Zuverlässigkeits-Kenngröße eines responsiven Systems.

Ein responsives, d.h. fehlertolerantes und echtzeitfähiges, System zur Signalverarbeitung findet vielfältig im Rahmen eines industriellen Automatisierungsprozesses Anwendung. Von besonderer Bedeutung ist ein responsives System in einem Automatisierungsprozeß, bei welchem die Einhaltung vorgegebener Zeitschranken oder die Erbringung geforderter Ausgangssignale innerhalb vorgegebener Zeitintervalle erforderlich ist. Solche Forderungen treten häufig in Fertigungsprozessen, Regelungs- und Steuerungsprozesses sowie Überwachungsprozessen auf, wie Beispielsweise in der Sicherheitsleittechnik einer Kernkraftanlage. Die Einhaltung von Zeitschranken bzw. Zeitintervallen hängt entscheidend von der Funktionstüchtigkeit der einzelnen, insbesondere gerätespezifischen, Komponenten ab. In einem komplexen System, bei dem Datenverarbeitungs-Einheiten zu einem großen Datennetz miteinander verbunden sind, können Fehler in einzelnen Komponenten bei Vorliegen eines Eingangssignalzustandes zu einem fehlerbehafteten Ausgangssignalzustand führen. Für bestehende Systeme zur Signalverarbeitung wird daher häufig eine Zuverlässigkeitsanalyse anhand der für das System zu berücksichtigenden Eingangssignalzustände durchgeführt.

Aus dem Dokument Control Engineering, Bd. 41, Nr. 9, 8/94, Seiten 63-66, ist ein Verfahren bekannt, bei dem ein Signalwert eines intelligenten Sensors hinsichtlich der Qualität anhand von einem Fehler-Code oder einem Validity Index bewertet wird.

An ein System zur Signalverarbeitung in der Sicherheitsleittechnik einer Kernkraftanlage (sicherheitsleittechnisches System) sind spezielle Anforderungen gestellt, die in sogenannten Anforderungs- und Dokumentationseinheiten aufgeführt werden. In einer solchen Einheit ist eine Mehrzahl disjunkter verfahrenstechnischer Prozeßabschnitte unter sicherheitstechnischen Aspekten zusammengefaßt. Beispiele solcher Einheiten sind die sogenannten Leittechnikfunktionen, welche ein Modell der Signalverarbeitung in der Sicherheitsleittechnik mit einer formalen Dokumentationshierarchie angeben. Für die Sicherheitsleittechnik in eine Druckwasserreaktor werden die speziellen Anforderungen durch bis zu 153 verschiedene Leittechnikfunktionen vorgegeben. Von besonderer Bedeutung für die Sicherheitsleittechnik einer Kernkraftanlage ist dabei die Kenntnis der Verfügbarkeit einzelner in dem System mittels Datenübertragungseinheiten, Datenverarbeitungseinheiten, Steuer- und Regeleinheiten umgesetzter Leittechnikfunktionen sowie der Verfügbarkeit bestimmter Kombinationen von Leittechnikfunktionen.

Hierbei ist insbesondere die Kenntnis, wie der Ausfall einzelner Komponenten die Verfügbarkeit des leittechnischen responsiven Systems beeinflußt, von Interesse. Als mögliche Ausfälle sind bei der Ermittlung der Verfügbarkeit folgende Fälle zu berücksichtigen:
- ein einzelner Sensor (Signalerfassungseinheit), und damit ein Einzelsignal, fällt aus;
- eine Ein- oder Ausgabebaugruppe, und damit eine Gruppe von Signalen fällt aus;
- ein Rechner (Datenverarbeitungseinheit), welcher einen Knoten in einem Datennetz darstellt, fällt aus;
- ein Kommunikationsprozessor fällt aus, d.h. bestimmte Signale können weder gesendet noch empfangen werden und
- sämtliche Rechner in einem Raum oder einem Gebäude fallen, beispielsweise bedingt durch einen Brand, aus.

Zur Bestimmung der Verfügbarkeit eines responsiven Systems zur Signalverarbeitung wird das System unter Anwendung mathematischer Analyseverfahren bei Berücksichtigung der möglichen Ausfälle von Komponenten teilweise untersucht. Die Auswertung von Ausfällen kann dabei anhand der Methode der Fehlerbäume, der Markov-Ketten, der generalisierten stochastischen Petri-Netze sowie der sogenannten "erneuerbaren Prozesse" (renewable processes) erfolgen. Die Verfügbarkeit des Systems kann durch eine eindeutige Zuverlässigkeitskenngröße quantifiziert werden, wobei die Anwendung obiger Methoden nur unter Durchführung von konservativen Vereinfachungen und Abschätzungen manuell ausführbar ist. Der Nachweis der Zuverlässigkeit eines vernetzten Systems der Sicherheitsleittechnik erfolgt hierbei über die Bestimmung der Zuverlässigkeit einzelner repräsentativer hinreichend komplexer und bedeutender Auslösesignale, welche bei einem Störfall entsprechende Sicherheitsmaßnahmen einleiten. Ein Beispiel für ein solches Auslösesignal ist das Signal, welches bei einem Störfall mit Verlust an Kernkühlmittel eine Umschaltung von einer Flutung des Reaktordruckbehälters auf einen Kühlbetrieb über den Reaktorsumpf auslöst. Bei der Zuverlässigkeitsanalyse wird an einem bestehenden System, also a posteriori, der maßgebliche Teil des Systems bestimmt, in welchem das Auslösesignal erzeugt wird, wobei die darin enthaltende Hardware sowie die Zuordnungen (Vernetzung) der Hardware, wie Sensoren, Datenübertragungs-Einheiten, Datenverarbeitungs-Einheiten, etc., bestimmt wird. Der Einfluß weiterer Teile des Systems (z.B. Ventilationssystem) kann abgeschätzt, ausgegrenzt sowie gegebenenfalls vereinfacht dargestellt werden. Für die Komponenten (Hardware) des maßgeblichen Teils, wie Dateneingabe-Einheiten und Datenausgabe-Einheiten, Datenverarbeitungs-Einheiten, Überwachungs-Einheiten und Voter, wird die jeweilige Wechselwirkung und eine jeweilige Ausfallwahrscheinlichkeit bestimmt (experimentell, theoretisch). Diese Ausfallwahrscheinlichkeiten liegen etwa in einem Bereich von 1 x 10⁻⁷/h bis 1 x 10⁻⁴/h. Den Ausfallwahrscheinlichkeiten werden Fehlerwahrscheinlichkeiten aufgrund systematischer Fehler, die in den verwendeten Rechnerprogrammen, in der verwendeten Hardware, in für einen gemeinsamen Zugriff von Rechnerprogrammen und/oder Hardware vorgesehenen Datenstrukturen sowie durch fehlerverursachende Ereignisse (Brand, etc.) latent vorhanden sind, zugeordnet. Die Vernetzung der Komponenten des maßgeblichen Teils wird durch mathematische Verknüpfungsoperationen aufgearbeitet und zusammen mit den Ausfallwahrscheinlichkeiten, ggf. in einer vereinfachten Struktur, einem Auswerteprogramm zugeführt. Ein solches Auswerteprogramm kann beispielsweise das Riskspektrum PSA-Programm der Firma Recon AB, Schweden, sein, welches anhand der Methode der Fehlerbäume eine konservative Abschätzung der Unverfügbarkeit (Ausfallwahrscheinlichkeit) für das entsprechende Auslösesignal liefert. Für das oben beispielhaft angeführte Auslösesignal liegt diese Unverfügbarkeit bei ca. 1 x 10⁻³. Eine so ermittelte Zuverlässigkeits-Kenngröße ist in der Regel zu konservativ und berücksichtigt den detaillierten Aufbau des responsiven Systems nur bedingt, wodurch auch eine Aufschlüsselung des Anteils der einzelnen Komponenten an der Unverfügbarkeit nur in groben Zügen möglich ist.

Aufgabe der Erfindung ist es daher, ein Verfahren zur Ermittlung einer Zuverlässigkeits-Kenngröße eines responsiven Systems, insbesondere eines sicherheitsleittechnischen Systems in einer Kernkraftanlage, sowie ein entsprechendes System zur Signalverarbeitung anzugeben.

Die erstgenannte Aufgabe wird mittels eines Verfahrens zur Bestimmung einer Zuverlässigkeits-Kenngröße eines responsiven Systems zur Signalverarbeitung, welches zu einem Eingangssignal-Zustand gemäß einer durch eine integrale Bearbeitungsspezifikation gegebenen Schrittfolge einen eindeutigen Ausgangssignal-Zustand erzeugt, dadurch gelöst, daß das responsive System eine Mehrzahl von Datenverarbeitungs-Einheiten, die über Datenübertragungs-Einheiten miteinander verbunden sind und auf denen Rechnerprogramme implementiert sind, welche modular aus einer Anzahl von Funktionsbausteinen aufgebaut sind, aufweist, wobei in einem Zuverlässigkeits-Modul die gemäß der Bearbeitungsspezifikation in einer ersten Datenbank hinterlegte Schrittfolge der Signalverarbeitung invers, d.h. von dem Ausgangssignal-Zustand zu dem Eingangssignal-Zustand hin, bearbeitet wird, derart, daß die Kombinationen von Fehlfunktionen und/oder Ausfällen der Datenverarbeitungs-Einheiten und der Datenübertragungs-Einheiten bestimmt werden, welche zu einem gültigen Ausgangssignal oder Ausgangssignal-Zustand führen und aus der Anzahl sämtlicher Kombinationen unter Berücksichtigung der in einer zweiten Datenbank gespeicherten Zuverlässigkeits-Kenngrößen jeder Datenverarbeitungs-Einheit und jeder Datenübertragungs-Einheit die Zuverlässigkeits-Kenngröße des responsiven Systems bestimmt wird.

Mittels der integralen Bearbeitungsspezifikation, in der die eindeutige Zuordnung der Datenbearbeitungs-Einheiten, der Datenübertragungs-Einheiten und der Rechnerprogramme sowie die Abfolge der automatischen Signalverarbeitung hinterlegt wird, wird in der ersten Datenbank der Aufbau des responsiven Systems detailgetreu gespeichert. Aus diesem Aufbau erfolgt unter Kenntnis der einzelnen verwendeten Komponenten des responsiven Systems eine automatische Zuverlässigkeitsanalyse des vollständigen responsiven Systems mit hohem Detaillierungsgrad, wobei durch die Betriebs-Kenngrößen die Angabe des aktuell verwendeten Prozessors, der Versionsnummer des jeweiligen Rechnerprogramms etc. gewährleistet ist. Die Bestimmung einer Zuverlässigkeits-Kenngröße für das responsive System wird in dem Zuverlässigkeit-Modul ausgeführt, wobei auf die notwendigen Daten der ersten Datenbank und der zweiten Datenbank automatisch zugegriffen werden kann und eine Analyse unter Berücksichtigung der gespeicherten Zuverlässigkeits-Kenngrößen der einzelnen Datenverarbeitungs-Einheiten und Datenübertragungs-Einheiten derart erfolgt, daß bis zu einem vorab festgelegten Detaillierungsgrad sämtliche möglichen Kombinationen von Fehlern und Ausfällen in den Datenverarbeitungs-Einheiten und den Datenübertragungs-Einheiten berücksichtigt werden, die bei Vorliegen eines Eingangsignals-Zustandes zu einem gültigen Ausgangssignal führen. Für eine bestimmte Leittechnikfunktion erfolgt automatisch eine Software-Spezifikation oder eine Spezifikation der Rechnerprogramme und eine Hardware-Spezifikation oder eine Spezifikation der Datenverarbeitungs-Einheiten sowie Datenübertragungs-Einheiten, wobei eine Aufteilung der Leittechnikfunktion auch in einzelne auf Zuverlässigkeit zu untersuchende Hardware- und/oder Software-Komponente vollständig automatisch erfolgt. Zudem können anhand der in der ersten Datenbank und der zweiten Datenbank gespeicherten Größen sämtliche relevanten Daten zur Eingabe in ein bereits bestehendes Rechnerprogramm zur Zuverlässigkeitsanalyse, in welchem beispielsweise eine Fehlerbaumanalyse implementiert ist, bereitgestellt werden. Diese Daten können dem Rechnerprogramm auch vollständig automatisch zugeführt werden. Aufgrund der formalen Bearbeitungsspezifikation und der Angabe sämtlicher Datenverarbeitungs-Einheiten sowie Datenübertragungs-Einheiten, für die jeweils eine eigene Zuverlässigkeits-Kenngröße gespeichert ist, erfolgt eine Bestimmung der Zuverlässigkeits-Kenngröße des responsiven Systems bzw. einer leittechnischen Funktion oder eines Teils dieser leittechnischen Funktion mit einem sehr hohen Detaillierungsgrad.

Die jeweilige Zuverlässigkeits-Kenngröße der Datenverarbeitungs- oder Datenübertragungs-Einheit berücksichtigt beispielsweise auch zeitliche Angaben, wie z.B. die mittlere Reparaturdauer der Einheit oder einer elementaren Komponente der Einheit. Hierdurch ist eine mittlere Verfügbarkeit des responsiven Systems besonders einfach bestimmbar. Weiterhin enthält die zweite Datenbank für jeden Funktionsbaustein eine eindeutige Angabe, beispielsweise in Form einer formalen Beschreibung, wie hoch die Zuverlässigkeit, daß von einem an dem Funktionsbaustein anliegenden Eingangssignal ein zugehöriges Ausgangssignal erzeugt wird, ist. Hierin ist insbesondere enthalten, für welche Eingangssignale an dem jeweiligen Funktionsbaustein eine aktive Statusverarbeitung durchgeführt wird. Dies bedeutet beispielsweise, daß bei einem Ausfall einer zur Realisierung des Funktionsbausteins verwendeten Hardware-Komponente (z.B. einer Eingabebaugruppe) in dem Signal ein Fehlerstatus gesetzt wird, wodurch der Funktionsbaustein mit aktiver Statusverarbeitung einen anderen Algorithmus abarbeitet als bei einem Nichtvorliegen des Fehlerstatus. Dies führt zu einem anderen Ausgangssignal, welches beispielsweise ein Default-Signal ist, das im Rahmen der Sicherheitsleittechnik unkritisch ist.

Zudem sind bei der Bestimmung der Zuverlässigkeits-Kenngröße Zuordnungsfehler in der Spezifikation der einzelnen Datenverarbeitungs-Einheiten und Datenübertragungs-Einheiten sowie der Rechnerprogramme aufgrund der integralen Bearbeitungsspezifikation, die bei der automatischen Erstellung der Rechnerprogramme berücksichtigt wird, ausgeschlossen. Weiterhin können Zuverlässigkeits-Kenngrößen einzelner gerätespezifischer Elemente des responsiven Systems, wie Sternkopplerbaugruppen, Sensoren, Transceiver und Kommunikationsprozessoren, durch ein Zuverlässigkeits-Teilmodul zusammengefaßt werden, wodurch eine nachfolgende (graphische) Darstellung der Zuverlässigkeitsanalyse eine gute Überschaubarkeit besitzt.

Das Verfahren eignet sich besonders zur Bestimmung einer Zuverlässigkeits-Kenngröße eines responsiven Systems bzw. einer leittechnischen Funktion in einem sicherheitsleittechnischen System einer Kernkraftanlage. Es erfaßt und berücksichtigt äußerst detalliert den Aufbau des responsiven Systems sowie die möglichen Ausfälle der darin verwendeten Datenverarbeitungs-Einheiten und Datenübertragungs-Einheiten. Gegenüber bekannten Verfahren, bei denen eine manuelle Auswertung und Zuordnung innerhalb des responsiven Systems erforderlich ist, zeichnet sich das Verfahren durch eine automatische und fehlerfreie Zuordnung innerhalb des responsiven Systems aus. Darüber hinaus erreicht der Detaillierungsgrad in der Zuverlässigkeitsanalyse eine mittels manueller Verfahren nicht erzielbare Tiefe.

Vorzugsweise wird mit dem Verfahren nach jeder Anderung der Bearbeitungsspezifikation, insbesondere der Datenverarbeitungs-Einheiten und der Datenübertragungs-Einheiten, die erste Datenbank aktualisiert.Aus den in der zweiten Datenbank hinterlegten und aktuellen Betriebs-Kenngrößen und mindestens einer Zuverlässigkeits-Kenngröße jeder Datenverarbeitungs-Einheit und jeder Datenübertragungs-Einheit sowie aus den aktualisierten Daten der Bearbeitungsspezifikation der ersten Datenbank wird die Zuverlässigkeits-Kenngröße des responsiven Systems bzw. einer leittechnischen Funktion oder eines Teils einer leittechnischen Funktion neu bestimmt. Hierdurch kann nach jeder Änderung des responsiven Systems die aktuelle Verfügbarkeit des responsiven Systems angegeben werden, was insbesondere bei einem sicherheitsleittechnischen Systems einer Kernkraftanlage von Vorteil ist.

Erfindungsgemäß wird die zweitgenannte Aufgabe durch ein responsives System zur Signalverarbeitung gelöst, welches zu einem Eingangssignalzustand einen eindeutigen Ausgangssignal-zustand erzeugt und welches eine Mehrzahl von Datenverarbeitungs-Einheiten die über Datenübertragungs-Einheiten miteinander verbunden sind und auf denen Rechnerprogramme implementiert sind, welche modular aus einer Anzahl von Funktionsbausteinen aufgebaut sind, aufweist und zudem die folgenden Komponenten hat:
a) eine erste Datenbank, in der die Zuordnung der Datenverarbeitungs-Einheiten, der Datenübertragungs-Einheiten und der Rechnerprogramme untereinander sowie die Schrittfolge der automatischen Signalverarbeitung gemäß einer integralen Bearbeitungsspezifikation, insbesondere die Detaillierung der Hardware- und Software-Komponenten, die gespeichert sind,
b) eine zweite Datenbank, in der Betriebs-Kenngrößen und zumindest eine Zuverlässigkeits-Kenngröße jeder Datenverarbeitungs-Einheit und jeder Datenübertragungs-Einheit gespeichert sind und
c) ein Zuverlässigkeits-Modul, welches mit der ersten Datenbank und der zweiten Datenbank verbunden ist, zur Bestimmung einer Zuverlässigkeitsgröße des responsiven Systems aus den Zuverlässigkeits-Kenngrößen der zweiten Datenbank unter Berücksichtigung von Kombinationen von Fehlfunktionen (Ausfällen) der Datenverarbeitungs-Einheiten und der Datenübertragungs-Einheiten, die zu einem fehlerhaften Ausgangssignalzustand führen.

Vorzugsweise hat das responsive System ein Überwachungsmodul, welches jede Änderung der Zuverlässigkeits-Kenngröße, insbesondere durch Veränderung der Datenverarbeitungs-Einheiten, der Datenübertragungs-Einheiten und/oder der Funktionsbausteine, erfaßt und dem Zuverlässigkeits-Modul zur Bestimmung einer aktualisierten Zuverlässigkeits-Kenngröße zuführt. Hierdurch wird mit jeder Änderung des responsiven Systems jeweils die aktuelle Zuverlässigkeits-Kenngröße des Systems oder der ihm zugeordneten leittechnischen Funktionen angegeben.

Das Verfahren zur Bestimmung einer Zuverlässigkeits-Kenngröße eines responsiven Systems sowie das entsprechende responsive System werden in der Zeichnung näher erläutert:
- FIG 1: einen schematischen Aufbau eines responsiven Systems und
- FIG 2: eine Übersicht der räumlichen Verteilung der Komponenten des responsiven Systems.

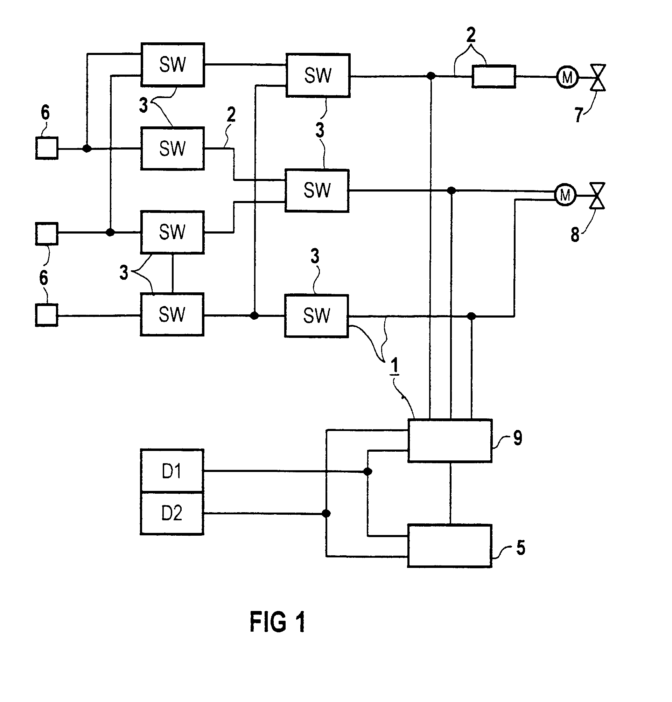

Das in FIG 1 schematisch dargestellte responsive System 1, weist eine Mehrzahl von Datenverarbeitungs-Einheiten 3 auf, die über Datenübertragungs-Einheiten 2 miteinander verbunden sind. Die Datenübertragungs-Einheiten 2 sind standardisierte Übertragungsleitungen, wie Ethernet-Koaxialkabel, und ebenfalls standardisierte Übertragungselemente, wie Verstärker, Repeater oder Bridges. Den Datenverarbeitungs-Einheiten 3 wird ein Eingangssignal-Zustand über Signalerzeugungs-Elemente 6, welche beispielsweise Meßsensoren sind, zugeführt. In FIG 1 sind der Übersichtlichkeit halber nur drei solcher Signalerzeugungs-Elemente 6 dargestellt. Im Rahmen eines leittechnischen Systems, insbesondere eines Systems der Sicherheitsleittechnik einer Kernkraftanlage (beispielsweise bei der Signalverarbeitung für die Druckspeichereinspeisung in einem Druckwasser-Reaktor), sind eine Vielzahl solcher Signalerzeugungs-Elemente 6 an verschiedenen, unter Umständen weit voneinander entfernten Orten, beispielsweise in einem Reaktor-Druckbehälter, angeordnet. Die Datenverarbeitungs-Einheiten 3 sind mit den Datenübertragungs-Einheiten 2 zu einem Rechnernetz verbunden, an welches ein Zuverlässigkeits-Modul 5 und ein Überwachungs-Modul 9 sowie Datenbanken D1 und D2 angeschlossen sind. Das responsive System 1 ist mit Regelelementen 7 sowie Steuerungselementen 8 verbunden. Diese Regelelemente 7 sowie Steuerungselemente 8 sind beispielsweise motorsteuerbare Ventile, die in einem geöffneten Zustand zu einer Druckentlastung von durchströmten Rohrleitungen führen. An die Regelelemente 7 und die Steuerelemente 8, von denen jeweils der Übersichtlichkeit halber nur eines dargestellt ist, wird von dem responsiven System ein Ausgangssignal (Steuersignal) übermittelt. Die Signalerzeugungs-Elemente 6 geben mit einer festen Periode einen jeweiligen aktuellen Eingangssignal-Zustand an das responsive System 1, welches spätestens nach einer maximalen Ausführungszeit hieraus den Ausgangssignal bestimmt und an die Regelelemente 7 sowie die Steuerungselemente 8 überträgt. Auf jeder Datenverarbeitungs-Einheit 3 sind Rechnerprogramme SW implementiert, die modular aus einer Anzahl von elementaren Funktionsbausteinen aufgebaut sind. Die Datenbank D1 enthält die Zuordnung der Datenverarbeitungs-Einheiten 3, der Datenübertragungs-Einheiten 2 und der Rechnerprogramme SW untereinander sowie die Schrittfolge der Signalverarbeitung gemäß einer integralen ganzheitlichen Bearbeitungsspezifikation. Die Datenbank D2 enthält Betriebskenngrößen der Datenverarbeitungs-Einheiten 3, der Datenübertragungs-Einheiten 2, die Bauart, Versionsnummer, technische Spezifikation, Prozessortyp und andere, sowie eine jeweilige Zuverlässigkeits-Kenngröße. Die Bestimmung einer Zuverlässigkeits-Kenngröße des responsiven Systems oder eines Teiles des responsiven Systems, beispielsweise einer leittechnischen Funktion im Rahmen der Sicherheitsleittechnik eines Druckwasser-Reaktors, erfolgt in dem Zuverlässigkeits-Modul 5 anhand der Zuverlässigkeits-Kenngrößen der zweiten Datenbank D2 und der in der Datenbank D1 hinterlegten Bearbeitungsspezifikation sowie unter Berücksichtigungen der Kombinationen von Fehlfunktionen und/oder Ausfällen der Datenverarbeitungs-Einheiten 3 und der Datenübertragungs-Einheiten 2, die bei Vorliegen eines Eingangssignal-Zustandes zu einem fehlerhaften Ausgangssignal-Zustand (z.B. gültigen Auslösesignal) führen. Dieses Zuverlässigkeits-Modul 5 ist hierzu mit der ersten Datenbank D1 und der zweiten Datenbank D2 verbunden, wobei die Datenbanken D1,D2 selbstverständlich auch in eine einzige Datenbank zusammengefaßt werden können. Änderungen der Zuverlässigkeits-Kenngrößen, insbesondere durch Veränderung der Bearbeitungsspezifikation und/oder Betriebskenngrößen der Datenverarbeitung-Einheiten 3, der Datenübertragungs-Einheiten 2 und/oder der Rechnerprogramme SW werden in dem Zuverlässigkeits-Modul 5 erfaßt, beispielsweise unmittelbar aus dem responsiven System 1 übertragen bzw. durch eine nicht dargestellte Eingabevorrichtung eingegeben. Diese Änderung der Zuverlässigkeits-Kenngrößen wird von dem Überwachungs-Modul 9 an das Zuverlässigkeits-Modul 5 übertragen, so daß in diesem die Bestimmung einer aktualisierten Zuverlässigkeits-Kenngröße für das responsive System 1 oder ein Teilsystem erfolgt. Hierdurch ist eine eindeutig quantifizierte Zuverlässigkeits-Kenngröße zu dem jeweils aktuell vorliegenden responsiven System 1 gegeben, so daß die Verfügbarkeit des tatsächlich vorhandenen und insbesondere für die Sicherheitsleittechnik eines Druckwasser-Reaktors verwendeten Systems bekannt ist.

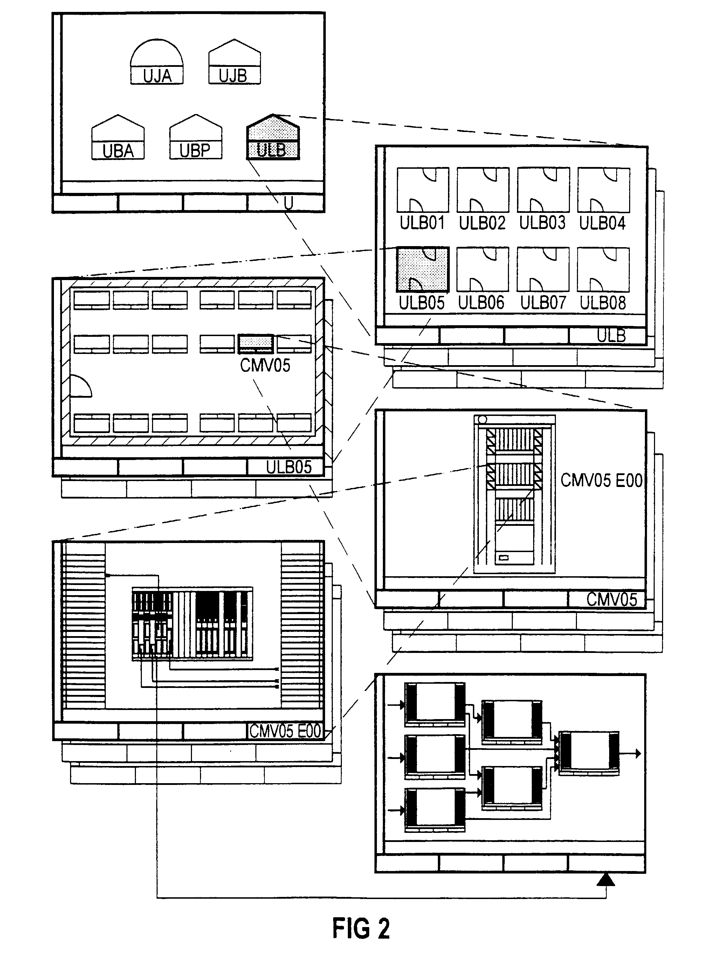

FIG 2 zeigt eine Zuordnung und Unterteilung von Rechnerprogrammen und Datenverarbeitungs-Einheiten in einem responsiven System der Sicherheitsleittechnik einer Kernkraftanlage. Das responsive System umfaßt Sensoren, Datenverarbeitungs-Einheiten und Datenübertragungs-Einheiten, die auf fünf Gebäude einer Kernkraftanlage (UJA, UJB, UBA, UBP, ULB) verteilt sind.

In FIG 2 ist dargestellt, wie eine räumliche Aufteilung der zur Durchführung der Leittechnikfunktion verwendeten Datenverarbeitungs-Einheiten erfolgt. Die für den gesamten Kraftwerksblock vorgesehene Leittechnikfunktion ULB wird in gebäudespezifische Komponenten ULB01 bis ULB09 aufgeteilt. Diese sind wiederum in solche Komponenten aufgeteilt, die in einzelnen Räumen untergebracht sind. In jedem dieser Räume erfolgt eine weitere Untergliederung der Komponenten des Systems in Schränke, in welchen entsprechende Baugruppenträger angeordnet sind, die letztendlich als kleinste Einheiten des Systems Rechnerprogramme oder analoge Schaltungen in Form sogenannter Funktionsbausteingruppen aufweisen. Durch diese örtlich hierarchische Unterteilung des die leittechnischen Funktion umsetzenden Systems ist eine eindeutige Verknüpfung und Zuordnung zwischen Rechnerprogramm und Datenverarbeitungs-Einheit gegeben. Hierdurch kann für jede Ebene dieser Hierarchie eine Zuverlässigkeits-Kenngröße angegeben werden und daraus die Zuverlässigkeits-Kenngröße der leittechnischen Funktion sowie des gesamten responsiven Systems eindeutig und fehlerfrei bestimmt werden.

Die Erfindung zeichnet sich durch ein responsives System aus, für welches eindeutig und mit hohem Detaillierungsgrad eine quantitative Zuverlässigkeits-Kenngröße bestimmt ist. Die Bestimmung der Zuverlässigkeits-Kenngröße erfolgt anhand der gespeicherten Zuverlässigkeits-Kenngrößen der in dem responsiven System verwendeten Datenverarbeitungs-Einheiten und Datenübertragungs-Einheiten sowie unter Berücksichtigung der eindeutig vorgegebenen Zuordnung der Einheiten untereinander. Die Ermittlung der Zuverlässigkeits-Kenngröße des responsiven Systems bzw. eines Teilsystems, insbesondere einer leittechnischen Funktion, erfolgt vollständig automatisch. Jede Veränderung des responsiven Systems kann ebenfalls vollautomatisch erfaßt werden und somit für die jeweils aktuelle Version des responsiven Systems die zugehörige Zuverlässigkeits-Kenngröße angegeben werden. Hierdurch ist jeweils die aktuell gültige Verfügbarkeit des responsiven Systems unter Berücksichtigung des hohen Detaillierungsgrads des Systems verfügbar, was insbesondere für industrielle Anlagen, wie z.B. Kernkraftanlagen, mit hohen sicherheitstechnischen Anforderungen vorteilhaft ist. Durch diese vollständig auf eine formale Spezifikation mit eindeutigen Zuordnungen basierenden Vorgehensweise entfällt eine in Praxis schwierige Validierung der dem responsiven System zugrundeliegenden Modellierung der Rechnerprogramme und der Datenverarbeitungs-Einheiten und Datenübertragungs-Einheiten sowie Steuerungselemente und Regelungselemente.

## Patentansprüche

1. Verfahren zur Bestimmung einer Zuverlässigkeitsgröße eines responsiven Systems (1) zur Signalverarbeitung, welches zu einem Eingangssignalzustand (IS) gemäß einer durch eine integrale Bearbeitungsspezifikation gegebenen Schrittfolge einen eindeutigen Ausgangssignalzustand (OS) erzeugt, welches System (1) eine Mehrzahl von Datenverarbeitungs-Einheiten (3), die über Datenübertragungs-Einheiten (2) miteinander verbunden sind und auf denen Rechnerprogramme (SW) implementiert sind, welche modular aus einer Anzahl von Funktionsbausteinen (FB) aufgebaut sind, aufweist, wobei in einem Zuverlässigkeits-Modul (5) die in einer Datenbank (D1) hinterlegte Schrittfolge invers bearbeitet wird, derart, daß Kombinationen von Fehlfunktionen und/oder Ausfällen der Datenverarbeitungs-Einheiten (3) und/oder der Datenübertragungs-Einheiten (2) bestimmt werden, welche zu einem gültigen Ausgangssignal-zustand führen, und daß daraus mit den jeweiligen, in einer Datenbank (D2) gespeicherten Zuverlässigkeits-Kenngrößen jeder Datenverarbeitungs-Einheit (3) und jeder Datenübertragungs-Einheit (2) die Zuverlässigkeitsgröße des responsiven Systems (1) bestimmt wird.

2. Verfahren nach Anspruch 1, bei dem nach jeder Ånderung der Bearbeitungsspezifikation, insbesondere der Datenverarbeitungs-Einheiten (3) und der Datenübertragungs-Einheiten (2), die Datenbank (D1) aktualisiert und die Zuverlässigkeitsgröße des responsiven Systems (1) neu bestimmt wird.

3. Responsives System (1) zur Signalverarbeitung mit einer Mehrzahl von Datenverarbeitungs-Einheiten (3), die über Datenübertragungs-Einheiten (2) miteinander verbunden sind und auf denen Rechnerprogramme (SW) implementiert sind, welche modular aus einer Anzahl von Funktionsbausteinen (FB) aufgebaut sind, und mit
a) einer ersten Datenbank (D1), in der die Zuordnung der Datenverarbeitungs-Einheiten (3), der Datenübertragungs-Einheiten (2) und der Rechnerprogramme (SW) untereinander sowie die Schrittfolge der automatischen Signalverarbeitung gemäß einer integralen Bearbeitungsspezifikation gespeichert sind,
b) einer zweiten Datenbank (D2), in der Betriebs-Kenngrößen und zumindest eine Zuverlässigkeits-Kenngröße jeder Datenverarbeitungs-Einheit (3) und jeder Datenübertragungs-Einheit (2) gespeichert sind und
c) mit einem Zuverlässigkeits-Modul (5), welches mit der ersten Datenbank (D1) und der zweiten Datenbank (D2) verbunden ist, zur Bestimmung einer Zuverlässigkeitsgröße des responsiven Systems (1) aus den Zuverlässigkeits-Kenngrößen der zweiten Datenbank (D2) unter Berücksichtigung von Kombinationen von Fehlfunktionen der Datenverarbeitungs-Einheiten (3) und der Datenübertragungs-Einheiten (2).

4. Responsives System (1) nach Anspruch 3, mit einem Überwachungs-Modul (9), welches jede Änderung der Zuverlässigkeits-Kenngrößen, insbesondere durch Veränderung der Datenverarbeitungs-Einheiten (3), der Datenübertragungs-Einheiten (2) und/oder der Funktionsbausteine (FB), erfaßt und dem Zuverlässigkeits-Modul (5) zur Bestimmung einer aktualisierten Zuverlässigkeitsgröße zuführt.

## Claims

1. Method for determining a reliability variable of a responsive system (1) for signal processing, which, for an input signal state (IS) according to a step sequence given by an integral processing specification, generates a definite output signal state (OS), which system (1) has a plurality of data processing units (3) which are connected to each other by way of data transmission units (2) and on which computer programs (SW) are implemented, which are assembled in a modular manner from a number of function blocks (FB), whereby in a reliability module (5) the step sequence deposited in a data base (D1) is processed inversely in such a way that combinations of misoperations and/or failures of the data processing units (3) and/or the data transmission units (2) are determined, which lead to a valid output signal state, and in that from this, with the respective reliability parameters of each data processing unit (3) and of each data transmission unit (2), which reliability parameters are stored in a data base (D2), the reliability variable of the responsive system (1) is determined.

2. Method according to claim 1, where after each change of the processing specification, in particular the data processing units (3) and the data transmission units (2), the data base (D1) is updated and the reliability variable of the responsive system (1) is determined anew.

3. Responsive system (1) for signal processing with a plurality of data processing units (3) which are connected to each other by way of data transmission units (2) and on which computer programs (SW) are implemented, which are assembled in a modular manner from a number of function blocks (FB), and having
a) a first data base (D1) in which the allocation of the data processing units (3), the data transmission units (2) and the computer programs (SW) among each other as well as the step sequence of the automatic signal processing according to an integral processing specification are stored,
b) a second data base (D2) in which operating characteristics and at least one reliability parameter of each data processing unit (3) and each data transmission unit (2) are stored and
c) a reliability module (5) which is connected to the first data base (D1) and the second data base (D2), for determining a reliability variable of the responsive system (1) from the reliability parameters of the second data base (D2) with consideration of combinations of misoperations of the data processing units (3) and the data transmission units (2).

4. Responsive system (1) according to claim 3, having a monitoring module (9) which detects each change of the reliability parameters, in particular by way of a change of the data processing units (3), the data transmission units (2) and/or the function blocks (FB) and supplies it to the reliability module (5) for the determination of an updated reliability variable.

## Revendications

1. Procédé de détermination d'un paramètre de fiabilité d'un système (1) auto-adaptatif de traitement de signaux, qui produit pour un état de signaux d'entrée (IS) un état de signaux de sortie (OS) univoque selon une succession d'opérations donnée par une spécification de traitement intégrale, lequel système (1) comporte plusieurs unités de traitement de données (3) qui sont reliées par l'intermédiaire d'unités de transmission de données (2) et sur lesquelles sont mis en oeuvre des programmes informatiques (SW) structurés de façon modulaire à partir d'un certain nombre de modules fonctionnels (FB), la succession d'opérations mémorisée dans une base de données (D1) étant traitée à l'envers dans un module de fiabilité (5) de telle sorte qu'on détermine des combinaisons de fonctionnements erronés et/ou de pannes des unités de traitement de données (3) et/ou des unités de transmission de données (2) qui conduisent à un état de signaux de sortie valable et qu'on détermine à partir de là avec les paramètres de fiabilité respectifs, mémorisés dans une base de données (D2), de chaque unité de traitement de données (3) et de chaque unité de transmission de données (2) le paramètre de fiabilité du système auto-adaptatif (1).

2. Procédé selon la revendication 1, dans lequel, après toute modification de la spécification de traitement, notamment des unités de traitement de données (3) et des unités de transmission de données (2), on actualise la base de données (D1) et on détermine de nouveau le paramètre de fiabilité du système auto-adaptatif (1).

3. Système (1) auto-adaptatif de traitement de signaux, comportant plusieurs unités de traitement de données (3), qui sont reliées par l'intermédiaire d'unités de transmission de données (2) et sur lesquelles sont mis en oeuvre des programmes informatiques (SW) structurés de façon modulaire à partir de modules fonctionnels (FB), et ayant les éléments suivants :
a) une première base de données (D1) qui mémorise l'association des unités de traitement de données (3), des unités de transmission de données (2) et des programmes informatiques (SW) entre eux ainsi que la succession d'opérations du traitement automatique de signaux selon une spécification de traitement intégrale,
b) une deuxième base de données (D2) qui mémorise des paramètres de fonctionnement et au moins un paramètre de fiabilité de chaque unité de traitement de données (3) et de chaque unité de transmission de données (2) et
c) un module de fiabilité (5) qui est relié à la première base de données (D1) et à la deuxième base de données (D2) et qui est destiné à la détermination d'un paramètre de fiabilité du système auto-adaptatif (1) à partir des paramètres de fiabilité de la deuxième base de données (D2) en tenant compte de combinaisons de fonctionnements erronés des unités de traitement de données (3) et des unités de transmission de données (2).

4. Système auto-adaptatif (1) selon la revendication 3, comportant un module de surveillance (3) qui détecte chaque modification des paramètres de fiabilité, notamment à cause d'une modification des unités de traitement de données (3), des unités de transmission de données (2) et/ou des modules fonctionnels (FB), et qui l'envoie au module de fiabilité (5) pour la détermination d'un paramètre de fiabilité actualisé.
